# EUROPEAN PATENT SPECIFICATION

(11) **EP 3 431 563 B1**
(45) Date of publication and mention of the grant of the patent: **04.05.2022**
(21) Application number: 18000607.4
(22) Date of filing: 18.07.2018
(51) Int. Cl.: C09J 153/02

(54) **REMOVABLE PRESSURE SENSITIVE ADHESIVE COMPOSITIONS**
ENTFERNBARE DRUCKEMPFINDLICHE KLEBSTOFFZUSAMMENSETZUNGEN
COMPOSITIONS ADHÉSIVES AMOVIBLES SENSIBLES À LA PRESSION

(30) Priority: 18.07.2017 US 201762534008 P
(43) Date of publication of application: 23.01.2019
(73) Proprietor: TRIMURTI HOLDING CORPORATION, Road Town Tortala (VG)
(72) Inventor: Dalley, Paul William, Baton Rouge, LA 70810 (US)
(74) Representative: Flaccus, Rolf-Dieter

(56) References cited:
- WO-A1-99/20708
- US-A- 4 728 572

## Description

### Cross Reference to Related Application

This application claims the right of priority based on US Provisional Application No. 62/534,008 entitled "Removable Pressure Sensitive Adhesive Compositions", filed on July 18 2017.

### Field of Invention

The present invention relates to removable grade pressure sensitive adhesives.

### Background of the Invention

Removable grade pressure sensitive adhesives differ from permanent pressure sensitive adhesives in that they form a temporary bond and not a permanent bond. Permanent pressure sensitive adhesives will build in peel strength versus time, are generally not required to peel cleanly from the substrate, and marring of the substrate surface when removed is not a requirement. Removable pressure sensitive adhesives, on the other hand, have a low build up in peel strength versus time, must peel cleanly from the substrate and cannot mare the surface of the substrate.

One of the earliest examples of a removable pressure sensitive adhesive is masking tape. The original application for masking tape was to protect the paint coat during auto body painting. The prior strong adhesive coated to butcher paper peeled off some of the paint that had just been applied. Masking tape was developed with goal to peel cleanly from the auto body and not mare the fresh paint coat. Similarly, painter's tape accomplishes the same goal but for building and construction applications. Removable pressure sensitive adhesives are also used for removable labels. These labels are often found on household appliances and consumer electronics. In this case the adhesive must remove, easily, cleanly, and not mare the surface.

In the examples above, the adhesive is coated onto a backing to make the tape or label. Removable pressure sensitive adhesives, however, can also be used without a backing. In this application, the adhesives are often referred to as fugitive adhesives. Fugitive adhesive are used to form temporary assemblies. The most common example is bonding of a credit card in a mailing. Another example is the bonding of removable flyers, or product samples in magazines, and the temporary bonding of labels to consumer goods, like cookware.

As removable pressure sensitive adhesives have proven to be valuable compositions, there exists in the art several approaches to formulating a removable pressure sensitive adhesives. One approach is to make a composition of a styrene-isoprene-styrene block copolymer, a low softening point aliphatic resin (less than 30⁰ C), and a metallic salt. The metallic salt is active at the interface between the adhesive and the bonded surface to lower adhesion and prevent a buildup of adhesion versus time. The art, however, teaches the use of zinc stearate as the metallic salt. The use of zinc and other heavy metals in adhesives is disfavored due to potential toxicity and the potential for future regulation, so it would be an advantage to have a removable adhesive without a heavy metal stearate.

Another approach describes a fugitive adhesive for temporarily bonded constructions such as a credit card attached to paper stock for mailings to customers. It teaches a composition of 5-40% by weight of an A-B-A block copolymer and 95-60% by weight of plasticizing oil. The adhesive, however, is not a pressure sensitive adhesive. The preferred A-B-A block copolymers for this approach are SEBS and SEEPS because they hold the plasticizing oil well and prevent bleeding of oil into the substrate. Unfortunately SEBS and SEEPS block copolymers do not readily form pressure sensitive adhesives, thus requiring hot lamination of the credit card to the paper substrate. Additionally, A-B-A block copolymers such as SIS and SBS that readily form pressure sensitive adhesives do not hold oil as well as forgoing polymers and will bleed oil into the substrate at the concentrations taught. Thus, it would be desirable to have a removable pressure sensitive adhesive based on SIS or SBS that does not require the use of a large amount of oil.

A further approach for making a removable pressure sensitive adhesive is a composition of 10-90% by weight styrene-isoprene-styrene block copolymer having a diblock content greater than 50% and a melt flow index less than 30 grams/10 min; from about 10-40% by weight of a tackifying resin with a softening point of less than 120⁰ C; and 10-50% by weight of a liquid plasticizer. The adhesive, however, has several deficiencies. First the use of a high diblock polymer can result in weak adhesive layer resulting in leaving adhesive residue on the surface of the substrate. Diblock is a low molecular weight species and makes for a weak adhesive. To counter the effect of the diblock, a high concentration of polymer is required to give the adhesive layer enough strength to prevent transfer of adhesive to the substrate. A high polymer concentration, however, can result in a high viscosity adhesive that is difficult to process. Oil can be added to improve processing, but then oil bleeding may become a problem. The prior art also teaches the use of styrene-isoprene-styrene polymers with a melt flow index of less than 30 grams/10 min (200⁰ C, 5kg). As melt flow index decreases, adhesive viscosity increases, resulting in adhesives that are difficult to process. Again oil may be added to reduce viscosity but then oil bleeding may become a problem.

Thus, there is a need in the art for a removable pressure sensitive adhesive that does not require the use of heavy metal salts; that uses a block copolymer that readily forms a pressure sensitive adhesive; does not have a high amount of diblock; and an adhesive composition that uses no or a limited amount of oil. The present invention describes a removable pressure sensitive adhesive that uses a block copolymer that has a low amount of diblock and preferably high melt flow index. Further, the block copolymer is a styrene-isoprene-styrene polymer that can be readily formulated into a removable pressure sensitive adhesive, using either no oil or a limited amount of oil.

### Summary of the Invention

This invention relates to removable pressure sensitive adhesive compositions. Where the adhesive compositions comprise the following main ingredients: at least one styrenic block copolymer; at least one tackifying resin; and at least one liquid plasticizer. In addition to the foregoing main ingredients, it is common to add at least one stabilizer to protect the main ingredients from degradation during manufacture. The stabilizers also protect the resulting adhesive during application and when the adhesive is put into service.

The invention also relates to a polymer that readily forms a pressure sensitive adhesive. The polymer is a styrene-isoprene-styrene block copolymer; where the block copolymer has at least 14% styrene by weight of the block copolymer, a diblock content of less than 50% by weight of the block copolymer, and a melt flow index of at least 15 g/10 minutes (190° C/2.16kg).

The invention further relates to a removable pressure sensitive adhesive. The adhesive must peel cleanly from stainless steel. It is preferred to have a 180° initial peel to stainless of no greater than 4 lbs/in, more preferably, less than 2 lbs/in, and most preferably less than 1 lbs/in. The adhesive is also preferred to have a loop tack to stainless steel of equal to or greater than 1 psi, preferably greater than 2 psi, and most preferably greater than 3 psi. In some cases a high amount grab is important. That is the loop tack is preferably greater than the initial peel. Lastly, the adhesive is preferably to have a viscosity of less than 350,000 mPa s at 177 °C, more preferably a viscosity of less than 200,000 mPa s at 177 °C, even more preferably less than 60,000 mPa s at 177 °C, much more preferably less than 50,000 mPa s at 177 °C, much even more preferably less than 10,000 mPa s at 177 °C, and ideally less than 5,000 mPa s at 177 °C. The adhesive is preferably to have a viscosity of greater than 15,000 mPa s @ 121⁰ C.

Lastly, the invention also relates to removable articles. By removable article, it is meant that a removable pressure sensitive adhesive is applied to at least one substrate, or sandwiched between two substrates, or a dot of adhesive deposited on a release coated substrate. One non-limiting example is tape. Tape has the removable pressure sensitive adhesive applied to one side of a backing and the backing is then wound upon itself to form a roll where the adhesive is in contact with the opposite side of the backing. Another non-limiting example is a label; using a manufacturing process a laminate of a face stock, an adhesive layer, and release liner, such as silicone coated paper, is produced. The manufacturing of labels is well known in the art and is described in U.S. Pat. 7288590.

For this invention, the adhesive layer is a removable pressure sensitive adhesive. Another non-limiting example of a removable article is the Post-it Note^{®} or the sticky note. These are small pieces of paper with a removable pressure sensitive adhesive on its back, made for temporarily attaching notes to documents and other surfaces. A further non-limiting example is the fugitive adhesive. In this case, the removable pressure sensitive adhesive is used to make temporary assemblies; such as a credit card, or a product sample applied to a letter to the consumer; or a removable flyer or a product sample in a magazine. Fugitive adhesives are also used temporarily apply labels to household goods such as cookware. Unlike the coated label, above, a label using a fugitive adhesive comprises a dot of the adhesive that affixes the label to the good. Another type of fugitive adhesive is the glue dot. In this case, a dot of the removable pressure sensitive adhesive is dispensed on a release liner in a serial fashion. The series of dots are then wound back on to themselves to form a roll where the dots are in contact with a double sided release liner. The glue dots are put into service by unrolling the release liner, manually removing the dot from the release liner, affixing the dot to one surface, and affixing a second substrate to form the assembly.

According to one embodiment, the present invention provides a removable hot melt pressure sensitive adhesive comprising at least one styrene-isoprene-styrene block copolymer being greater than 25% and no more than 50% by weight of the adhesive wherein the block copolymer has: a styrene content of 25% to 35% by weight of the block copolymer; the diblock content of less than 5% by weight of the block copolymer; and a melt flow index of at least 35g/10 minutes (190° C/2.16 kg); at least one tackifying resin being from 5% to 50% by weight of the adhesive; at least one liquid plasticizer being from 0% to 45% by weight of the adhesive of; and a stabilizer; wherein a 180⁰ initial peel value to stainless steel of the adhesive is no greater than 71.432 kg/m ( 4.0 pounds per linear inch).

According to one embodiment, the present invention provides the adhesive as above, wherein the block copolymer is greater than 40% and no more than 50% by weight of the adhesive.

According to one embodiment, the present invention provides the adhesive as above, wherein the tackifying resin is from 25% to 50% by weight of the adhesive.

According to one embodiment, the present invention provides the adhesive as above, wherein the tackifying resin is from 40% to 50% by weight of the adhesive.

According to one embodiment, the present invention provides the adhesive as above, wherein the liquid plasticizer is from 0% to 35% by weight of the adhesive.

According to one embodiment, the present invention provides the adhesive as above, wherein the liquid plasticizer is from 5% to 30% by weight of the adhesive.

According to one embodiment, the present invention provides the adhesive as above, wherein the liquid plasticizer is from 20% to 45% by weight of the adhesive.

According to one embodiment, the present invention provides the adhesive as above, wherein the adhesive has a viscosity of less than 60,000 mPa s at 177°C.

According to one embodiment, the present invention provides the adhesive as above, wherein the tackifying resin is selected from the group consisting of: aliphatic, cycloaliphatic, aromatic hydrocarbon, modified hydrocarbon, aromatic modified aliphatic, aromatic modified cycloaliphatic, terpenes, modified terpenes, rosins, gum rosins, rosin esters, hydrogenated hydrocarbons, hydrogenated aliphatic, hydrogenated aromatic modified aliphatic, hydrogenated cycloaliphatic, hydrogenated rosin ester, and hydrogenated terpene resins; and the liquid plasticizer is selected from the group consisting of: white oils, process oils, naphthenic oils, polybutenes, and polyisobutylenes; wherein the adhesive has a loop tack greater than its initial peel and has a viscosity of less than 60,000 mPa s at 177°C.

According to one embodiment, the present invention provides the adhesive as above, wherein the tackifying resin has a softening point of less than 90°C.

According to one embodiment, the present invention provides a removable article comprising a substrate; and a removable hot melt pressure sensitive adhesive applied to at least one side of said substrate; wherein said adhesive comprises at least one styrene-isoprene-styrene block copolymer being greater than 25% and no more than 50% by weight of the adhesive wherein the block copolymer has: a styrene content of 25% to 35% by weight of the block copolymer; the diblock content of less than 5% by weight of the block copolymer; and a melt flow index of at least 35g/10 minutes (190° C/2.16 kg); at least one tackifying resin being 5% to 50% by weight of the adhesive; at least one liquid plasticizer being from 0% to 45% by weight of the adhesive; and a stabilizer; wherein the adhesive has a 180⁰ initial peel value to stainless steel no greater than 1171.432 kg/m ( 4.0 pounds per linear inch).

According to one embodiment, the present invention provides the removable article as above, wherein the block copolymer is greater than 40% and no more than 50% by weight of the adhesive.

According to one embodiment, the present invention provides the removable article as above, wherein the tackifying resin is from 25% to 50% by weight of the adhesive.

According to one embodiment, the present invention provides the removable article as above, wherein the tackifying resin is from 40% to 50% by weight of the adhesive.

According to one embodiment, the present invention provides the removable article as above, wherein the liquid plasticizer is from 0% to 35% by weight of the adhesive.

According to one embodiment, the present invention provides the removable article as above, wherein the liquid plasticizer is from 5% to 30% by weight of the adhesive.

According to one embodiment, the present invention provides the removable article as above, wherein the liquid plasticizer is from 20% to 45% by weight of the adhesive.

According to one embodiment, the present invention provides the removable article as above, wherein the adhesive has a viscosity of less than 60,000 mPa s at 177°C.

According to one embodiment, the present invention provides the removable article as above, wherein the tackifying resin is selected from the group consisting of: aliphatic, cycloaliphatic, aromatic hydrocarbon, modified hydrocarbon, aromatic modified aliphatic, aromatic modified cycloaliphatic, terpenes, modified terpenes, rosins, gum rosins, rosin esters, hydrogenated hydrocarbons, hydrogenated aliphatic, hydrogenated aromatic modified aliphatic, hydrogenated cycloaliphatic, hydrogenated rosin ester, and hydrogenated terpene resins; and the liquid plasticizer is selected from the group consisting of: white oils, process oils, naphthenic oils, polybutenes , and polyisobutylenes; wherein the adhesive has a loop tack that is at least equal to or greater than its initial peel; and the adhesive has a viscosity of less than 60,000 mPa s at 177°C.

According to one embodiment, the present invention provides the removable article as above, wherein the tackifying resin has a softening point of less than 90°C.

### Brief Description of the Drawings

Figure 1 is a chart showing 180⁰ peel versus time in accordance with one example of the present invention.
Figure 2 is a chart showing 180⁰ peel versus two tackifying resins on different concentrations in accordance with certain examples of the present invention.
Figure 3 is a chart showing adhesive viscosity versus two tackifying resins on different concentrations in accordance with certain examples of the present invention.

### Detailed Description of the Invention

The invention described herein is an adhesive made using a block copolymer as a base.

The preparation of adhesives using block copolymers is well known in the art and described in U.S. Pat. 3239478. In this case, the block copolymer is a styrene-isoprene-styrene polymer that is described in detail below along with co-ingredients carefully selected to modify the block copolymer to yield a removable pressure sensitive adhesive. It is well known in the art to use tackifying resins and liquid plasticizers as co-ingredients to modify the block copolymer. Additionally, it is also well known in the art to add stabilizers to the adhesive composition to protect the polymer and the co-ingredients during manufacture and application of the adhesive. Additionally, the stabilizers protect the adhesive once it is put into service.

The use of tackifying resins to modify styrene-isoprene-styrene block copolymers is well known in the art. The tackifying resins useful to the present invention include: aliphatic, cycloaliphatic, aromatic hydrocarbon, modified hydrocarbons and hydrogenated versions thereof; terpenes and modified terpenes and hydrogenated versions thereof; and rosins, gum rosins, modified rosins and hydrogenated versions thereof. The softening point of these resins is preferably less than 120⁰ C, more preferably less than 110⁰ C, even more preferably less than 100⁰ C, and most preferably less than 90 °C. In addition, tackifying resins that are liquid at room temperature are useful as well. These resins are commercially available, non-limiting examples of aliphatic resins are: Escorez 1315 having a of softening point of 115⁰ C, Escorez 1102 and 1304 each having a softening point of 100⁰ C, and Escorez 1310LC having a softening point of 95⁰ C, all available from Exxon Chemical, Houston, TX; other examples are, Wingtack RWT 7850 having a softening point of 102⁰ C, Wingtack 95 and Wingtack 98 each having a softening point of 98° C, all available from Total Cray Valley, of Exton, PA; and Piccotac 1115 having a softening point of 112° C, Piccotac 1100 having a softening point of 101⁰ C, and Piccotac 1095 having a softening point of 96⁰ C all available from Eastman Chemical, Kingsport, TN. It is also common to use aromatic modified hydrocarbon resins, non-limiting examples being: Wingtack Plus having a softening point of 96⁰ C, Wingtack Extra having a softening point of 97⁰ C, Wingtack ET having a softening point of 95° C, Wingtack STS having a softening point of 94° C and Wingtack 86 having a softening point of 88° C all available from Total Cray Valley, of Exton, PA; other examples are, Piccotac 9105 having a softening point of 105⁰ C, Piccotac 8095 having a softening point of 95° C, and Piccotac 7590 having a softening point of 91⁰ C, all available from Eastman Chemical, Kingsport, TN; and Escorez 2203LC having a softening point of 93⁰ C, from Exxon Chemical, Houston, TX. Also there are cycloaliphatic resins non-limiting examples such as: LX685,135 having a softening point of 115⁰ C and LX-3100 having a softening point of 108° C, all available from Neville Chemical, Pittsburg, PA; other examples include Tekrez C918 having a softening point of 118° C and Tekrez C902 having a softening point of 100⁰ C, available from Tekrez, Fleming Island, FL. It is also common in the art to use hydrocarbon resins with varying levels of hydrogenation, non-limiting examples include: Eastotac H-115R, 115L, and 115W all having a softening point of 115⁰ C, and Eastotac H-100R, 100L, and 10W all having a softening point of 100⁰ C, all available from Eastman Chemical, Kingsport, TN; with "R", "L" and "W" grades indicating increasing levels of hydrogenation and lighter color respectively. Similarly, there are hydrogenated cycloaliphatic resins with varying levels hydrogenation and color, non-limiting examples being: Escorez 5415 with a softening point of 118⁰ C, Escorez 5400 having a softening point of 103⁰ C, and Escorez 5380 having a softening point of 86⁰ C from Exxon Chemical, Houston, TX. Additionally there are hydrogenated aromatic modified aliphatic resins, non-limiting examples include: Escorez 5615 a softening point of 118⁰ C, Escorez 5600 having a softening point of 102⁰ C, and Escorez 5690 having a softening point of 90⁰ C from Exxon Chemical, Houston, TX. For removable pressure sensitive adhesives it is also useful to use resins that are liquid at room temperature. Some non-limiting examples are Wingtack 10 from Total Cray Valley, of Exton, PA, having a softening point of 10⁰ C; Regalrez 1018 liquid hydrogenated aromatic hydrocarbon resin from Eastman Chemical, Kingsport, TN with a pour point of 18⁰ C; and WestRez 5010 from Ingevity, North Charleston, SC with a softening point of 10⁰ C. Tackifying resins derived from renewable resources are used as well. Non-limiting examples include: rosin esters such as WestRez 5110 having a softening point of 110⁰ C, WestRez 5101 having a softening point of 99⁰ C, WestRez 5090 and WestRez 5092, having softening points of 86 and 88⁰ C respectively, from Ingevity, North Charleston, SC. Hydrogenated versions of rosin esters are available as well, one non-limiting examples is Foral 105, from Pinova, Brunswik, GA having as softening point of 99⁰ C. Polyterpene and styrene modified terpenes are useful as well, one non-limiting example is Piccolyte A115, from Pinova, Brunswik, GA having as softening point of 115⁰ C; and hydrogenated polyterpenes non-limiting examples include: Clearon P115 having a softening point of 115⁰ C, Clearon P105 having a softening point of 105⁰ C, and Clearon P85 having a softening point of 85⁰ C, provided by Yasuhara Chemical, Hiroshima, Japan.

It is also common in the art to use a liquid plasticizer. For the purposes of this invention a liquid plasticizer includes, oils and liquid polymers. Plasticizers provide fluidity to the adhesive and decrease viscosity, peel value, storage modulus (G') and lower the glass transition temperature of the adhesive. The oils useful herein are white oils, process oils, or naphthenic oils; non-limiting examples are respectively: Hydrobrite 380 PO, from Sonneborn, Parsippany, NJ; Tufflo 6056, from Citgo, Houston, TX; and Nyflex 222B, from Nynas, Houston, TX. Examples of liquid polymers include polybutenes such as the Indopol series from Ineos Oligomers, La Porte, TX and polyisobutylenes from Lubrizol, Wickliffe, OH.

A stabilizers, also referred to as antioxidants (A.O.), are used in adhesives. Stabilizers are added to the adhesive composition to prevent degradation of the polymer and co-ingredients during manufacture and application of the adhesive. Additionally the stabilizers protect the adhesive from degradation once it's put into service. Such stabilizers are commercially available from BASF, Florham Park, NJ, and include Irganox 1010, Irganox 565 and Irganox 1076 which are examples of hindered phenols. These are primary antioxidants and may be used alone or in combination with other stabilizers like phosphite antioxidants. Examples of phosphite antioxidants are: Irgaphos 168 from BASF, Florham Park, NJ, or Cynaox LTDP, from Cytec Solvay Group, Stamford, CT. The phosphite antioxidants are secondary antioxidants and are not used alone. The former are non-limiting examples of primary and secondary antioxidants commonly used in adhesive compositions; moreover there are many other types and manufacturers of hindered phenol and phosphite antioxidants.

The adhesive compositions described herein use a block copolymer as the base. A block copolymer is a polymer comprising a block of a monovinyl aromatic hydrocarbon and a block of a conjugated diene. The preparation of block copolymers is well known in the art and is described in U.S. Pats. 3265765, 5171791 and 5292819. In this instance, the block copolymer is a styrenic-block-copolymer having the following formulae:
(1) S-I-S, or
(2) S-I, or
(3) (S-I-B)n-X.

Where S is a block of polystyrene, I is a block of polyisoprene, B is a block of polybutadiene, X is a multifunctional coupling agent, and n is an integer, where n is 2 or more. Styrenic-block-copolymers according to formulae 1-3 are commonly referred to in the art, respectively, as triblock, diblock, and radial polymers. It is common in the art to blend polymers according formulae 1-3 in various proportions to produce specific grades for use. It is common to provide polymers based predominately on formula 1; or a blend of formulae 1 and 2; or formulae 2 and 3, or a blend of formulae 1, 2, and 3. Collectively it is also common in the art to refer to styrenic-block-copolymers described by formulae 1-3 individually or in combinations thereof, as styrene-isoprene-styrene block copolymers. Non-limiting examples of styrene-isoprene-styrene block copolymers, from Dexco Polymers, Houston, TX, are provided in Table II.

In one mode, the styrene-isoprene-styrene block copolymer should be a blend of triblock and diblock where: (a) the styrene content of the block copolymer should be at least 14% by weight of the block copolymer, preferably between 15 to 45% by weight of the block copolymer and more preferably between 18 to 35% by weight of the block copolymer; (b) the melt flow index of the block copolymer should be at least 10g/10 minutes (200⁰ C/5kg), preferably greater than 25g/10 minutes (200⁰ C /5kg), more preferably at least 35g/10 minutes (190°C/2.16kg), even more preferably greater than 35g/10 minutes (200⁰ C /5kg), most preferred being greater than or equal to 100g/10 minutes (200⁰ C/5kg) or at least 15g/10 minutes (190⁰C/2.16kg); and (c) the diblock content is less than 50% by weight of the block copolymer, more preferably less than or equal to 45% by weight of the block copolymer, much more preferably less than 30%, even much more preferably less than 20 or 15% by weight of the block copolymer, most preferably less than 5% by weight of the block copolymer.

In another mode, the styrene-isoprene-styrene block copolymer should be a blend of triblock and diblock where: (a) styrene content should be between 18 to 35% by weight of the block copolymer and more even preferably between 25 to 35%; (b) the melt flow index should be greater than or equal to 100g/10 minutes (200⁰C/5kg), preferably between 35g/10 minutes (190⁰C/2.16kg) and 150g/10 minutes(190⁰C/2.16kg) or 38g/10 minutes (190⁰C/2.16kg); and (c) the diblock content is less than 20% by weight of the block copolymer.

In the most preferred mode, the styrene-isoprene-styrene block copolymer should be a blend of triblock and diblock where: (a) styrene content should be 30% by weight of the block copolymer; (b) the melt flow index should be between 35g/10 minutes (190⁰C/2.16kg) and 50g/10 minutes(190⁰C/2.16kg) or 38g/10 minutes (190⁰C/2.16kg); and (c) the diblock content is less than 1% by weight of the block copolymer.

In one embodiment, the adhesive composition comprises a styrene-isoprene-styrene block copolymer, a tackifying resin, a liquid plasticizer, and a stabilizer.

In another embodiment, the liquid plasticizer is partially replaced with a tackifying resin that is liquid at room temperature. In yet another embodiment, the liquid plasticizer is completely replaced with the liquid tackifier. In the best mode, the liquid tackifier concentration is minimized or eliminated in favor of a tackifying resin that is solid at room temperature.

### EXAMPLES

### Test Methods

Loop Tack: loop tack to stainless steel was measured using an Instru-Met T10 Tensometer according to Dexco Test Procedure L020, which is based generally on Pressure Sensitive Tape Counsel Method PSTC-16 revised 2007.

Peel: 180° peel to stainless steel was measured using an Instru-Met T10 Tensometer according to Dexco Test Procedure L1, which is based generally on Pressure Sensitive Tape Counsel Method PSTC-101 revised 2007.

Viscosity: the melt viscosities of the adhesives were determined using Brookfield Thermosel Viscometer Model RVDV II+ Pro Extra using a number 27 spindle. The test was run according to Dexco Test Procedure L021, which is based generally on ASTM D3236-04.

Adhesive Compositions: The adhesive compositions and test specimens where prepared according to Dexco Test Procedure L03. The adhesive compositions where blended 50% solids wt./wt. in toluene. Cast adhesive films were prepared at 1.3 to 1.8 mils thick, dry, on Mylar. For viscosity testing, the adhesive solutions where devolatilized under vacuum per Dexco Procedure L139.

Melt Flow Index: the melt flow index of the polymers was measured using a Tinus Olsen Extrusion Plastometer according to Dexco Test Procedure L023 which is based on generally ASTM D1238-10. This is a dead weight piston test that measures the extrusion rate of thermoplastic materials. The key test parameters are temperature and weight. For lower melt index polymers, 200⁰ C and 5kg are used. For higher melt index polymers, 190⁰ C and 2.16kg are used. Results are reported in grams/10 min and the test conditions, e.g. 38g/10 min (190⁰ C/2.16 kg).

| Table I. Adhesive Compositions, % wt/wt. | | | | | | | | | | | | |
|---|---|---|---|---|---|---|---|---|---|---|---|---|
| Comp. No. | Styrene-Isoprene-Styrene Polymer | | | | Resin | | | | Liquid Plasticizer | | A. O. | Total % |
| | Vector 4111A | Vector 4113A | Vector 4211A | Polymer DPX-660 | Escorez 1310LC | Wingtack 98 | Escorez 2203LC | Wingtack 10 | Indopol H100 | Tufflo 6056 | Irganox 1010 | |
| 1 | - | 49.8 | - | - | 29.8 | - | - | 19.9 | - | - | 0.5 | 100 |
| 2 | - | - | 46.4 | - | - | - | 30.0 | 23.1 | - | - | 0.5 | 100 |
| 3 | - | 47.3 | - | - | 42.7 | - | - | - | 9.5 | - | 0.5 | 100 |
| 4 | 49.8 | - | - | - | 29.8 | - | - | 19.9 | - | - | 0.5 | 100 |
| 5 | 49.8 | - | - | - | 29.8 | - | - | - | - | 19.9 | 0.5 | 100 |
| 6 | 40.0 | - | - | - | 30.0 | - | - | 9.5 | - | 20.0 | 0.5 | 100 |
| 7 | - | - | - | 49.8 | 29.8 | - | - | 19.9 | - | - | 0.5 | 100 |
| 8 | - | - | - | 45.0 | 25.0 | - | - | 14.5 | - | 15.0 | 0.5 | 100 |
| 9 | - | 33.2 | - | 16.6 | 29.8 | - | - | 19.9 | - | - | 0.5 | 100 |
| 10 | - | 24.9 | - | 24.9 | 29.8 | - | - | 19.9 | - | - | 0.5 | 100 |
| 12 | - | 16.6 | - | 33.2 | 29.8 | - | - | 19.9 | - | - | 0.5 | 100 |
| 13 | - | - | - | 50.0 | - | 16.7 | - | 16.7 | - | 16.7 | 0.0 | 100 |
| 14 | - | - | - | 50.0 | - | 50.0 | - | 0.0 | - | 0.0 | 0.0 | 100 |
| 15 | - | - | - | 50.0 | - | 0.0 | - | 0.0 | - | 50.0 | 0.0 | 100 |
| 16 | - | - | - | 50.0 | - | 33.3 | - | 8.3 | - | 8.3 | 0.0 | 100 |
| 17 | - | - | - | 50.0 | - | 25.0 | - | 25.0 | - | 0.0 | 0.0 | 100 |
| 18 | - | - | - | 50.0 | - | 0.0 | - | 25.0 | - | 25.0 | 0.0 | 100 |
| 19 | - | - | - | 50.0 | - | 8.3 | - | 8.3 | - | 33.3 | 0.0 | 100 |
| 20 | - | - | - | 50.0 | - | 0.0 | - | 50.0 | - | 0.0 | 0.0 | 100 |
| 21 | - | - | - | 50.0 | - | 25.0 | - | 0.0 | - | 25.0 | 0.0 | 100 |
| 22 | - | - | - | 50.0 | - | 8.3 | - | 33.3 | - | 8.3 | 0.0 | 100 |
| Where "-" means not used in the adhesive composition; "Comp. No." = Composition Number. For adhesive properties see Table III and IV. For Polymer Properties see Table II. | | | | | | | | | | | | |

Table I, lists a series of adhesive compositions based on styrene-isoprene-styrene block copolymers, tackifying resins, and liquid plasticizers. The adhesives listed in Table I were prepared by dissolving the polymer and co-ingredients in toluene at 50% solids. Table II, lists the physical properties of the styrene-isoprene-styrene polymers used as a base for the adhesive compositions in Table I.

| Table II. Styrene-Isoprene-Styrene Block Copolymers | | | | |
|---|---|---|---|---|
| Polymer | Formula | Styrene, % | Diblock, % | Melt Flow Index ^{i,ii} |
| Vector 4111A | S-I-S | 18 | <1 | 12ⁱ |
| Vector 4113A | S-I-S/S-I | 15 | 18 | 10ⁱ |
| Vector 4230 | (S-I-B)n-X/SI | 20 | 30 | 14ⁱ |
| Vector 4120N | (S-I-B)n-X/S-I-S/S-I | 14 | 12 | 10ⁱ |
| Vector 4211A | S-I-S | 30 | <1 | 13ⁱ |
| Polymer DPX-660 | S-I-S | 30 | <1 | 38ⁱⁱ |
| Vector 4411A | S-I-S | 44 | <1 | 40ⁱ |
| ⁱ grams/1 0 min (200⁰ C, 5kg) | | | | |
| ⁱⁱ grams/10 min (190⁰ C, 2.16kg) | | | | |

Tables III and IV lists the adhesive properties for the compositions listed in Table I. It provides data on loop tack, 180° peel, and viscosity at 121 and 177⁰ C.

| Table III. Adhesive Properties | | | | | | | | | |
|---|---|---|---|---|---|---|---|---|---|
| Comp. No. | Loop Tack, psi | 180⁰ Peel on Stainless Steel, lbs/in | | | | | | Viscosity @ 121⁰ C, mPa s | Viscosity @ 177° C, mPa s |
| | | Initial Peel | Peel after 1 Hr. | Peel after 24 Hrs. | Peel after 48 Hrs. | Peel after 72 Hrs. | Peel after 1 week. | | |
| 1 | 3 | 2 | 3 | 4 | 4 | 4 | 4 | ND | 191,667 |
| 2 | 5 | 4 | 4 | 4 | 4 | 4 | 4 | ND | 41,875 |
| 3 | 4 | 4 | 6 | 5 | 4 | 6 | 5 | ND | 335,000 |
| 4 | 4 | 3 | 3 | 3 | 3 | 4 | 4 | ND | 90,000 |
| 5 | 1 | <1 | 1 | 1 | 2 | 1 | 1 | ND | 125,000 |
| 6 | 2 | 1 | 1 | 1 | 1 | 2 | 2 | ND | 24,500 |
| 7 | 5 | 3 | 3 | 4 | 4 | 4 | 4 | >1M | 7,875 |
| 8 | 2 | <1 | <1 | 1 | 2 | 2 | 2 | >1M | 3,897 |
| Where ND = Not Determined. Test not run; and "Comp. No. = Composition Number. For adhesive composition see Table I. | | | | | | | | | |

### Example 1

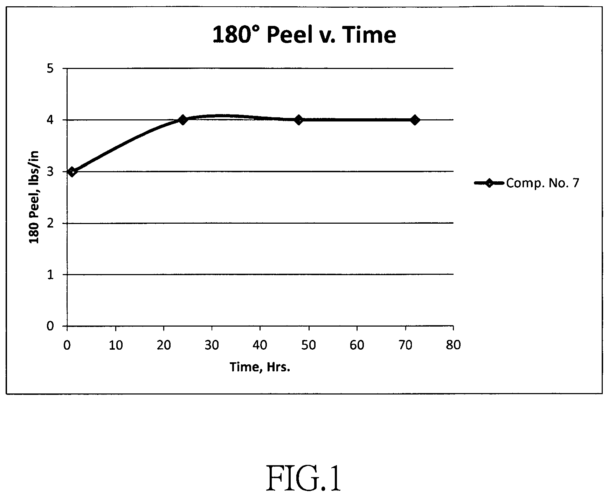

Composition Number 7 from Table I lists a blend of 49.8 wt% DPX-660 (see Table II); 29.8 wt% Escorez 1310LC and 19.9 wt% Wingtack 10 as tackifying resins, with 0.5 wt% Irganox 1010 as the anti-oxidant. The adhesive was prepared according to Dexco Test Procedure L03. The adhesive has a loop tack of 5 psi, an initial peel of 3 lbs/in and a low build up in peel versus time, as shown in Figure 1, with a peel of 3 lbs/in after 1 hr, 4 lbs/in after 24 hrs, 4 lbs/in after 48 hrs, 4 lbs/in after 72 hrs, and 4 lbs/in after 1 week, bonded to stainless steel. The adhesive has a viscosity of 7,875 mPa s @ 177⁰ C (Table III).

### Example 2

Composition Number 13 from Table I lists a blend of 50 wt% DPX-660 (see Table II); 16.7 wt% Wingtack 98 and 16.7 wt% Wingtack 10 as tackifying resins, and 16.7 wt% Tufflo 6056 as the liquid plasticizer. The adhesive was prepared according to Dexco Test Procedure L03. The adhesive has a loop tack of 1 psi, an initial peel of <1 lbs/in and a low build up in peel versus time with a peel of 1 lbs/in after 24 hrs., bonded to stainless steel. The adhesive has a viscosity of 4,833 mPa s @ 177⁰ C (Table IV).

| Table IV. Adhesive Properties | | | | | |
|---|---|---|---|---|---|
| Comp. No. | Loop Tack, Psi | 180⁰ Peel, Ibs/in | | Viscosity @ 121⁰ C, mPa s | Viscosity @ 177° C, mPa s |
| | | Initial | After 24 Hrs. | | |
| 9 | 4 | 3 . | ND | ND | 59,750 |
| 10 | 4 | 3 | ND. | ND | 39,333 |
| 12 | 5 | 3 | ND. | ND | 24,574 |
| 13 | 1 | <1 | 1 | >1M | 4,833 |
| 14 | 2 | 5 | 6 | >1M | 16,857 |
| 15 | <1 | <1 | 1 | >1M | 4,179 |
| 16 | 4 | 2 | 3 | >1M | 6,700 |
| 17 | 3 | 2 | 3 | >1M | 4,803 |
| 18 | <1 | <1 | <1 | 169,750 | 2,905 |
| 19 | <1 | <1 | <1 | >1M | 4,000 |
| 20 | 1 | <1 | <1 | 28,125 | 2,888 |
| 21 | 1 | <1 | <1 | >1M | 7,500 |
| 22 | 1 | <1 | <1 | 167,500 | 3,703 |
| Where ND = Not Determined. Test not run; and "Comp. No. = Composition Number. For adhesive composition see Table I. | | | | | |

### Example 3

Composition Number 16 from Table I lists a blend of 50 wt% DPX-660 (see Table II); 33.3 wt% Wingtack 98 and 8.3 wt% Wingtack 10 as tackifying resins and 8.3 wt% Tufflo 6056 as the liquid plasticizer. The adhesive was prepared according to Dexco Test Procedure L03. The adhesive has a loop tack of 4 psi, an initial peel of 2 lbs/in and a low build up in peel versus time with a peel of 3 lbs/in after 24 hrs., bonded to stainless steel. The adhesive has a viscosity of 6,700 mPa s @ 177⁰ C (Table IV).

### Example 4

Composition Number 17 from Table I lists a blend of 50 wt% DPX-660 (see Table II); 25.0 wt% Wingtack 98 and 25.0 wt% Wingtack 10 as tackifying resins. The adhesive was prepared according to Dexco Test Procedure L03. The adhesive has a loop tack of 3 psi, an initial peel of 2 lbs/in and a low build up in peel versus time with a peel of 3 lbs/in after 24 hrs., bonded to stainless steel. The adhesive has a viscosity of 4,803 mPa s @ 177⁰ C (Table IV).

### Example 5

The adhesives of Compostion Numbers 18, 20 and 22 respectively has a viscosity greater than 15,000 mPa s @ 121⁰ C. These compositions demonstrate a minimal amount of liquid plasticizer and/or tackifying resin is used. Each of these adhesives contains the styrene-isoprene-styrene block copolymer up to 50wt% (Polymer DPX-660) and therefore limits the content of the tackifying resin and the liquid plasticizer being no more than 50wt%. Particularly to the adhesive of Compostion Number 20, there is no liquid plasticizer.

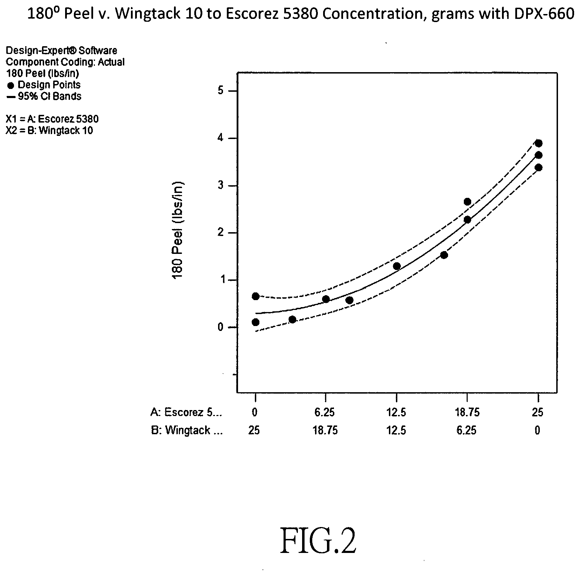

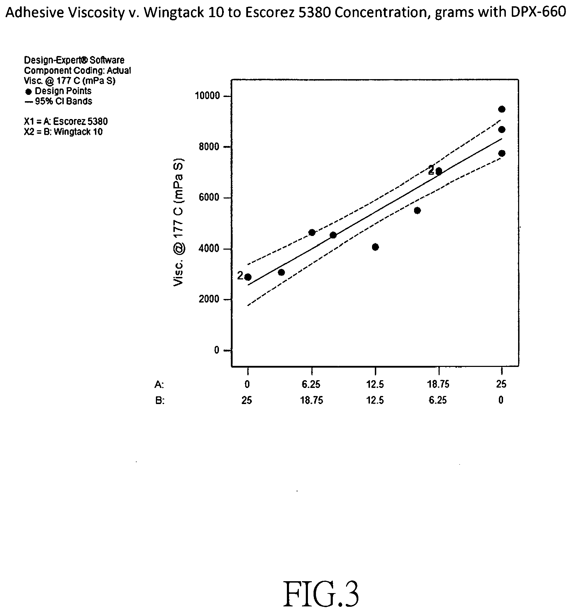

Figures 2 and 3 respectively shows 180⁰ peel and adhesive viscosity versus two tackifying resins on different concentrations in accordance with some examples of the present invention. The two tackifying resins each has a softening point of less than 90^{°C} (Escorez 5380 is 86⁰ C and Wingtack 10 is 10⁰ C).

While the invention has been described by way of examples and in terms of preferred embodiments, it would be apparent to those skilled in the art to make various equivalent replacements, amendments and modifications in view of specification of the invention. Therefore, the scope of the appended claims should be accorded the broadest interpretation so as to encompass all such replacements, amendments and modifications without departing from the scope of the invention.

## Claims

1. A removable hot melt pressure sensitive adhesive comprising:
at least one styrene-isoprene-styrene block copolymer being greater than 25% and no more than 50% by weight of the adhesive, wherein the block copolymer has a styrene content of 25% to 35 % by weight of the block copolymer, a diblock content of less than 5% by weight of the block copolymer, and a melt flow index of at least 35g/10 minutes (190 °C/2.16 kg), the melt flow index being measured using a Tinius Olsen Extrusion Plastometer based on ASTM D1238-10;
at least one tackifying resin being from 5% to 50% by weight of the adhesive;
at least one liquid plasticizer being from 0% to 45% by weight of the adhesive of; and
a stabilizer;
wherein the 180° initial peel value to stainless steel of the adhesive is no greater than 71.432 kg/m (4.0 pounds per linear inch), and the 180° initial peel value to stainless steel being measured using an Instru-Met T10 Tensometer based on Pressure Sensitive Tape Counsel Method PSTC-1 01 revised 2007.

2. The adhesive of claim 1, wherein the block copolymer is greater than 40% and no more than 50% by weight of the adhesive.

3. The adhesive of claim 1, wherein the tackifying resin is from 25% to 50% by weight of the adhesive.

4. The adhesive of claim 1, wherein the tackifying resin is from 40% to 50% by weight of the adhesive.

5. The adhesive of claim 1, wherein the liquid plasticizer is from 0% to 35% by weight of the adhesive.

6. The adhesive of claim 1, wherein the liquid plasticizer is from 5% to 30% by weight of the adhesive.

7. The adhesive of claim 1, wherein the liquid plasticizer is from 20% to 45% by weight of the adhesive.

8. The adhesive of claim 1 wherein the adhesive has a viscosity of less than 60,000 mPa·s at 177 °C, the viscosity being determined using a Brookfield Thermosel Viscometer based on ASTM D3236-04.

9. The adhesive of claim 1 wherein:
the tackifying resin is selected from the group consisting of aliphatic, cycloaliphatic, aromatic hydrocarbon, modified hydrocarbon, aromatic modified aliphatic, aromatic modified cycloaliphatic, terpenes, modified terpenes, rosins, gum rosins, rosin esters, hydrogenated hydrocarbons, hydrogenated aliphatic, hydrogenated aromatic modified aliphatic, hydrogenated cycloaliphatic, hydrogenated rosin ester, and hydrogenated terpene resins; and
the liquid plasticizer is selected from the group consisting of: white oils, process oils, naphthenic oils, polybutenes, and polyisobutylenes; wherein
the adhesive has a loop tack to stainless steel greater than its initial peel, and has a viscosity of less than 60,000 mPa·s at 177 °C, the loop tack to stainless steel being measured using an Instru-Met T10 Tensometer based on Pressure Sensitive Tape Counsel Method PSTC-16 revised 2007, and the viscosity being determined using a Brookfield Thermosel Viscometer based on ASTM D3236-04.

10. The adhesive of Claim 9 wherein the tackifying resin has a softening point of less than 90 °C.

11. A removable article comprising:
a substrate; and
a removable hot melt pressure sensitive adhesive applied to at least one side of said substrate; wherein said adhesive comprises:
at least one styrene-isoprene-styrene block copolymer being greater than 25% and no more than 50% by weight of the adhesive, wherein the block copolymer has a styrene content of 25% to 35 % by weight of the block copolymer, a diblock content of less than 5% by weight of the block copolymer, and a melt flow index of at least 35g/10 minutes (190 °C/2.16 kg), the melt flow index being measured using a Tinius Olsen Extrusion Plastometer based on ASTM D1238-10;
at least one tackifying resin being 5% to 50% by weight of the adhesive;
at least one liquid plasticizer being from 0% to 45% by weight of the adhesive; and
a stabilizer;
wherein the adhesive has a 180° initial peel value to stainless steel no greater than 71.432 kg/m (4.0 pounds per linear inch), and the 180° initial peel value to stainless steel being measured using an Instru-Met T10 Tensometer based on Pressure Sensitive Tape Counsel Method PSTC-1 01 revised 2007.

12. The removable article of claim 11, wherein the block copolymer is greater than 40% and no more than 50% by weight of the adhesive.

13. The removable article of claim 11, wherein the tackifying resin is from 25% to 50% by weight of the adhesive.

14. The removable article of claim 11, wherein the tackifying resin is from 40% to 50% by weight of the adhesive.

15. The removable article of claim 11, wherein the liquid plasticizer is from 0% to 35% by weight of the adhesive.

16. The removable article of claim 11, wherein the liquid plasticizer is from 5% to 30% by weight of the adhesive.

17. The removable article of claim 11, wherein the liquid plasticizer is from 20% to 45% by weight of the adhesive.

18. The removable article of claim 11 wherein the adhesive has a viscosity of less than 60,000 mPa·s at 177 °C, the viscosity being determined using a Brookfield Thermosel Viscometer based on ASTM D3236-04.

19. The removable article of claim 11 wherein
the tackifying resin is selected from the group consisting of: aliphatic, cycloaliphatic, aromatic hydrocarbon, modified hydrocarbon, aromatic modified aliphatic, aromatic modified cycloaliphatic, terpenes, modified terpenes, rosins, gum rosins, rosin esters, hydrogenated hydrocarbons, hydrogenated aliphatic, hydrogenated aromatic modified aliphatic, hydrogenated cycloaliphatic, hydrogenated rosin ester, and hydrogenated terpene resins; and
the liquid plasticizer is selected from the group consisting of: white oils, process oils, naphthenic oils, polybutenes, and polyisobutylenes; wherein
the adhesive has a loop tack to stainless steel that is at least equal to or greater than its initial peel, and the loop tack to stainless steel being measured using an Instru-Met T10 Tensometer based on Pressure Sensitive Tape Counsel Method PSTC-16 revised 2007; and the adhesive has a viscosity of less than 60,000 mPa·s at 177 °C, the viscosity being determined using a Brookfield Thermosel Viscometer based on ASTM D3236-04.

20. The removable article of claim 19 wherein the tackifying resin has a softening point of less than 90 °C.

## Patentansprüche

1. Ablösbarer Haftschmelzklebstoff, umfassend:
mindestens ein Styrol-Isopren-Styrol-Blockcopolymer, das mehr als 25 Gew.-% und nicht mehr als 50 Gew.-% des Klebstoffs ausmacht, wobei das Blockcopolymer einen Styrolgehalt von 25 bis 35 Gew.-% des Blockcopolymers, einen Diblock-Gehalt von weniger als 5 Gew.-% des Blockcopolymers und einen Schmelzindex von mindestens 35 g/10 Minuten (190 °C/2,16 kg) aufweist, wobei der Schmelzindex mit einem Tinius-Olsen-Extrusionsplastometer auf der Grundlage von ASTM D1238-10 gemessen wird,
mindestens ein klebrigmachendes Harz, das 5 bis 50 Gew.-% des Klebstoffs ausmacht,
mindestens einen flüssigen Weichmacher, der 0 bis 45 Gew.-% des Klebstoffs ausmacht, und
einen Stabilisator,
wobei der 180°-Anfangsschälwert des Klebstoffs an rostfreiem Stahl nicht größer als 71,432 kg/m (4,0 Pfund pro linearem Zoll) ist und der 180°-Anfangsschälwert an rostfreiem Stahl unter Verwendung eines Instru-Met-T10-Tensometers auf der Grundlage der Pressure-Sensitive-Tape-Counsel-Methode PSTC-101, revidiert 2007, gemessen wird.

2. Klebstoff nach Anspruch 1, wobei das Blockcopolymer mehr als 40 Gew.-% und nicht mehr als 50 Gew.-% des Klebstoffs ausmacht.

3. Klebstoff nach Anspruch 1, wobei das klebrigmachende Harz 25 bis 50 Gew.-% des Klebstoffs ausmacht.

4. Klebstoff nach Anspruch 1, wobei das klebrigmachende Harz 40 bis 50 Gew.-% des Klebstoffs ausmacht.

5. Klebstoff nach Anspruch 1, wobei der flüssige Weichmacher 0 bis 35 Gew.-% des Klebstoffs ausmacht.

6. Klebstoff nach Anspruch 1, wobei der flüssige Weichmacher 5 bis 30 Gew.-% des Klebstoffs ausmacht.

7. Klebstoff nach Anspruch 1, wobei der flüssige Weichmacher 20 bis 45 Gew.-% des Klebstoffs ausmacht.

8. Klebstoff nach Anspruch 1, wobei der Klebstoff eine Viskosität von weniger als 60.000 mPa·s bei 177 °C aufweist, wobei die Viskosität unter Verwendung eines Brookfield-Thermosel-Viskosimeters auf der Grundlage von ASTM D3236-04 bestimmt wird.

9. Klebstoff nach Anspruch 1, wobei:
das klebrigmachende Harz ausgewählt ist aus der Gruppe bestehend aus aliphatischen, cycloaliphatischen, aromatischen Kohlenwasserstoffen, modifizierten Kohlenwasserstoffen, aromatisch modifizierten Aliphaten, aromatisch modifizierten Cycloaliphaten, Terpenen, modifizierten Terpenen, Kolophonium, Kolophoniumharzen, Harzestern, hydrierten Kohlenwasserstoffen, hydrierten Aliphaten, hydrierten aromatisch modifizierten Aliphaten, hydrierten Cycloaliphaten, hydrierten Harzestern und hydrierten Terpenharzen, und
der flüssige Weichmacher ausgewählt ist aus der Gruppe bestehend aus: Weißölen, Prozessölen, naphthenischen Ölen, Polybutenen und Polyisobutylenen, wobei
der Klebstoff eine Schlaufenklebrigkeit (Loop Tack) auf rostfreiem Stahl aufweist, die größer ist als seine Anfangsschälhaftung, und eine Viskosität von weniger als 60.000 mPa·s bei 177 °C hat, wobei die Schlaufenklebrigkeit auf rostfreiem Stahl unter Verwendung eines Instru-Met-T10-Tensometers auf der Grundlage der Pressure-Sensitive-Tape-Counsel-Methode PSTC-16, revidiert 2007, gemessen wird und die Viskosität unter Verwendung eines Brookfield-Thermosel-Viskosimeters auf der Grundlage von ASTM D3236-04 bestimmt wird.

10. Klebstoff nach Anspruch 9, wobei das klebrigmachende Harz einen Erweichungspunkt von weniger als 90 °C hat.

11. Ablösbarer Gegenstand, umfassend:
ein Substrat, und
einen ablösbaren Haftschmelzklebstoff, der auf mindestens eine Seite des Substrats aufgebracht ist, wobei der Klebstoff umfasst:
mindestens ein Styrol-Isopren-Styrol-Blockcopolymer, das mehr als 25 und nicht mehr als 50 Gew.-% des Klebstoffs ausmacht, wobei das Blockcopolymer einen Styrolgehalt von 25 bis 35 Gew.-% des Blockcopolymers, einen Diblock-Gehalt von weniger als 5 Gew.-% des Blockcopolymers und einen Schmelzindex von mindestens 35 g/10 Minuten (190 °C/2,16 kg) aufweist, wobei der Schmelzindex unter Verwendung eines Tinius-Olsen-Extrusionsplastometers auf der Grundlage von ASTM D1238-10 gemessen wird,
mindestens ein klebrigmachendes Harz, das 5 bis 50 Gew.-% des Klebstoffs ausmacht,
mindestens einen flüssigen Weichmacher, der 0 bis 45 Gew.-% des Klebstoffs ausmacht, und
einen Stabilisator,
wobei der Klebstoff einen 180°-Anfangsschälwert an rostfreiem Stahl von nicht mehr als 71,432 kg/m (4,0 Pfund pro linearem Zoll) aufweist und der 180°-Anfangsschälwert auf rostfreiem Stahl unter Verwendung eines Instru-Met-T10-Tensometers auf der Grundlage der Pressure-Sensitive-Tape-Counsel-Methode PSTC-101, revidiert 2007, gemessen wird.

12. Ablösbarer Gegenstand nach Anspruch 11, wobei das Blockcopolymer mehr als 40 und nicht mehr als 50 Gew.-% des Klebstoffs ausmacht.

13. Ablösbarer Gegenstand nach Anspruch 11, wobei das klebrigmachende Harz 25 bis 50 Gew.-% des Klebstoffs ausmacht.

14. Ablösbarer Gegenstand nach Anspruch 11, wobei das klebrigmachende Harz 40 bis 50 Gew.-% des Klebstoffs ausmacht.

15. Ablösbarer Gegenstand nach Anspruch 11, wobei der flüssige Weichmacher 0 bis 35 Gew.-% des Klebstoffs ausmacht.

16. Ablösbarer Gegenstand nach Anspruch 11, wobei der flüssige Weichmacher 5 bis 30 Gew.-% des Klebstoffs ausmacht.

17. Ablösbarer Gegenstand nach Anspruch 11, wobei der flüssige Weichmacher 20 bis 45 Gew.-% des Klebstoffs ausmacht.

18. Ablösbarer Gegenstand nach Anspruch 11, wobei der Klebstoff eine Viskosität von weniger als 60.000 mPa·s bei 177 °C aufweist, wobei die Viskosität unter Verwendung eines Brookfield-Thermosel-Viskosimeters auf der Grundlage von ASTM D3236-04 bestimmt wird.

19. Ablösbarer Gegenstand nach Anspruch 11, wobei
das klebrigmachende Harz ausgewählt ist aus der Gruppe bestehend aus: aliphatischen, cycloaliphatischen, aromatischen Kohlenwasserstoffen, modifizierten Kohlenwasserstoffen, aromatisch modifizierten Aliphaten, aromatisch modifizierten Cycloaliphaten, Terpenen, modifizierten Terpenen, Kolophonium, Kolophoniumharzen, Harzestern, hydrierten Kohlenwasserstoffen, hydrierten Aliphaten, hydrierten aromatisch modifizierten Aliphaten, hydrierten Cycloaliphaten, hydrierten Harzestern und hydrierten Terpenharzen, und
der flüssige Weichmacher ausgewählt ist aus der Gruppe bestehend aus: Weißölen, Prozessölen, naphthenischen Ölen, Polybutenen und Polyisobutylenen, wobei
der Klebstoff eine Schlaufenklebrigkeit auf rostfreiem Stahl aufweist, die mindestens gleich oder größer als seine Anfangsschälhaftung ist, und die Schlaufenklebrigkeit auf rostfreiem Stahl unter Verwendung eines Instru-Met-T10-Tensometers auf der Grundlage der Pressure-Sensitive-Tape-Counsel-Methode PSTC-16, revidiert 2007, gemessen wird,
und der Klebstoff eine Viskosität von weniger als 60.000 mPa·s bei 177 °C aufweist, wobei die Viskosität unter Verwendung eines Brookfield-Thermosel-Viskosimeters auf der Grundlage von ASTM D3236-04 bestimmt wird.

20. Ablösbarer Gegenstand nach Anspruch 19, wobei das klebrigmachende Harz einen Erweichungspunkt von weniger als 90 °C hat.

## Revendications

1. Adhésif thermofusible amovible sensible à la pression comprenant :
au moins un copolymère séquencé styrène-isoprène-styrène représentant plus de 25 % et pas plus de 50 % en poids de l'adhésif, le copolymère séquencé ayant une teneur en styrène de 25 % à 35 % en poids du copolymère séquencé, une teneur en dibloc inférieure à 5 % en poids du copolymère séquencé, et un indice de fluidité à chaud d'au moins 35 g/10 minutes (190 °C/2,16 kg), l'indice de fluidité à chaud étant mesuré à l'aide d'un plastomètre à extrusion Tinius Olsen sur la base de la norme ASTM D1238-10 ;
au moins une résine collante représentant de 5 % à 50 % en poids de l'adhésif ; au moins un plastifiant liquide représentant de 0 % à 45 % en poids de l'adhésif ; et
un agent stabilisant :
dans lequel la valeur de pelage initiale à 180 ° sur l'acier inoxydable de l'adhésif n'est pas supérieure à 71,432 kg/m (4,0 livres par pouce linéaire), et la valeur de pelage initiale à 180 ° sur l'acier inoxydable étant mesurée à l'aide d'un tensiomètre Instru-Met T10 sur la base de la méthode du Conseil des Rubans Sensibles à la Pression PSTC-101 révisée en 2007.

2. Adhésif selon la revendication 1, dans lequel le copolymère séquencé représente plus de 40 % et pas plus de 50 % en poids de l'adhésif.

3. Adhésif selon la revendication 1, dans lequel la résine collante représente de 25 % à 50 % en poids de l'adhésif.

4. Adhésif selon la revendication 1, dans lequel la résine collante représente de 40 % à 50 % en poids de l'adhésif.

5. Adhésif selon la revendication 1, dans lequel le plastifiant liquide représente de 0 % à 35 % en poids de l'adhésif.

6. Adhésif selon la revendication 1, dans lequel le plastifiant liquide représente de 5 % à 30 % en poids de l'adhésif.

7. Adhésif selon la revendication 1, dans lequel le plastifiant liquide représente de 20 % à 45 % en poids de l'adhésif.

8. Adhésif selon la revendication 1, dans lequel l'adhésif a une viscosité inférieure à 60 000 mPa.s à 177 °C, la viscosité étant déterminée à l'aide d'un viscosimètre Brookfield Thermosel sur la base de la norme ASTM D3236-04.

9. Adhésif selon la revendication 1, dans lequel :
la résine collante est choisie dans le groupe constitué par un hydrocarbure aliphatique, cycloaliphatique, aromatique, un hydrocarbure modifié, un aliphatique modifié par un aromatique, un cycloaliphatique modifié par un aromatique, les terpènes, les terpènes modifiés, les colophanes, les gommes colophanes, les esters de colophane, les hydrocarbures hydrogénés, un aliphatique hydrogéné, un aliphatique hydrogéné modifié par un aromatique, un cycloaliphatique hydrogéné, un ester de colophane hydrogéné et les résines de terpène hydrogénées ; et
le plastifiant liquide est choisi dans le groupe constitué par : les huiles blanches, les huiles de traitement, les huiles naphténiques, les polybutènes et les polyisobutylènes ; dans lequel
l'adhésif a une adhérence de boucles sur l'acier inoxydable supérieure à son pelage initial, et a une viscosité inférieure à 60 000 mPa.s à 177 °C, l'adhérence de boucles sur l'acier inoxydable étant mesurée à l'aide d'un tensiomètre Instru-Met T10 sur la base de la méthode du Conseil des rubans sensibles à la pression PSTC-16 révisée en 2007, et la viscosité étant déterminée à l'aide d'un viscosimètre Brookfield Thermosel sur la base de la norme ASTM D3236-04.

10. Adhésif selon la revendication 9, dans lequel la résine collante a un point de ramollissement inférieur à 90 °C.

11. Article amovible comprenant :
un substrat ; et
un adhésif thermofusible amovible sensible à la pression appliqué sur au moins un côté dudit substrat ; dans lequel ledit adhésif comprend :
au moins un copolymère séquencé styrène-isoprène-styrène représentant plus de 25 % et pas plus de 50 % en poids de l'adhésif, le copolymère séquencé ayant une teneur en styrène de 25 % à 35 % en poids du copolymère séquencé, une teneur en dibloc inférieure à 5 % en poids du copolymère séquencé, et un indice de fluidité à chaud d'au moins 35 g/10 minutes (190 °C/2,16 kg), l'indice de fluidité à chaud étant mesuré à l'aide d'un plastomètre à extrusion Tinius Olsen sur la base de la norme ASTM D1238-10 ;
au moins une résine collante représentant 5 % à 50 % en poids de l'adhésif ; au moins un plastifiant liquide représentant de 0 % à 45 % en poids de l'adhésif ; et
un agent stabilisant :
dans lequel l'adhésif à une valeur de pelage initiale à 180 ° sur l'acier inoxydable non supérieure à 71,432 kg/m (4,0 livres par pouce linéaire), et la valeur de pelage initiale à 180 ° sur l'acier inoxydable étant mesurée à l'aide d'un tensiomètre Instru-Met T10 sur la base de la méthode du Conseil des Rubans Sensibles à la Pression PSTC-101 révisée en 2007.

12. Article amovible selon la revendication 11, dans lequel le copolymère séquencé représente plus de 40 % et pas plus de 50 % en poids de l'adhésif.

13. Article amovible selon la revendication 11, dans lequel la résine collante représente de 25 % à 50 % en poids de l'adhésif.

14. Article amovible selon la revendication 11, dans lequel la résine collante représente de 40 à 50 % en poids de l'adhésif.

15. Article amovible selon la revendication 11, dans lequel le plastifiant liquide représente de 0 % à 35 % en poids de l'adhésif.

16. Article amovible selon la revendication 11, dans lequel le plastifiant liquide représente de 5 % à 30 % en poids de l'adhésif.

17. Article amovible selon la revendication 11, dans lequel le plastifiant liquide représente de 20 % à 45 % en poids de l'adhésif.

18. Article amovible selon la revendication 11, dans lequel l'adhésif a une viscosité inférieure à 60 000 mPa.s à 177 °C, la viscosité étant déterminée à l'aide d'un viscosimètre Brookfield Thermosel sur la base de la norme ASTM D3236-04.

19. Article amovible selon la revendication 11, dans lequel
la résine collante est choisie dans le groupe constitué par : un hydrocarbure aliphatique, cycloaliphatique, aromatique, un hydrocarbure modifié, un aliphatique modifié par un aromatique, un cycloaliphatique modifié par un aromatique, les terpènes, les terpènes modifiés, les colophanes, les gommes colophanes, les esters de colophane, les hydrocarbures hydrogénés, un aliphatique hydrogéné, un aliphatique hydrogéné modifié par un aromatique, un cycloaliphatique hydrogéné, un ester de colophane hydrogéné et les résines de terpène hydrogénées ; et
le plastifiant liquide est choisi dans le groupe constitué par : les huiles blanches, les huiles de traitement, les huiles naphténiques, les polybutènes et les polyisobutylènes ; dans lequel
l'adhésif a une adhérence de boucles sur l'acier inoxydable qui est au moins égale ou supérieure à son pelage initial, et l'adhérence de boucles sur l'acier inoxydable étant mesurée à l'aide d'un tensiomètre Instru-Met T10 sur la base de la méthode du Conseil des Rubans Sensibles à la Pression PSTC-16 révisée en 2007 ; et l'adhésif a une viscosité inférieure à 60 000 mPa.s à 177 °C, la viscosité étant déterminée à l'aide d'un viscosimètre Brookfield Thermosel sur la base de la norme ASTM D3236-04.

20. Article amovible selon la revendication 19, dans lequel la résine collante a un point de ramollissement inférieur à 90 °C.
